# EUROPÄISCHE PATENTSCHRIFT

(11) **EP 1 604 845 B1**
(45) Veröffentlichungstag und Bekanntmachung des Hinweises auf die Patenterteilung: **12.03.2008**
(21) Anmeldenummer: 05012285.2
(22) Anmeldetag: 08.06.2005
(51) Int. Cl.: B60G 17/015, B60G 17/052, B60G 21/10

(54) **Luftfederungseinrichtung für Fahrzeuge, insbesondere für Nutzfahrzeuge**
Pneumatic suspension unit for a vehicle, in particular for commercial vehicles
Système de suspension pneumatique, en particulier pour véhicules utilitaires

(30) Priorität: 11.06.2004 DE 102004028325
(43) Veröffentlichungstag der Anmeldung: 14.12.2005
(73) Patentinhaber: KNORR-BREMSE SYSTEME FÜR NUTZFAHRZEUGE GMBH, 80809 München (DE)
(72) Erfinder: Hecker, Falk, Dr., 71706 Markgröningen (DE); Fecht, Günther, 71691 Freiberg (DE); Röther, Friedbert, 74389 Cleebronn (DE); Geiger, Winfried, 75417 Mühlacker (DE)
(74) Vertreter: Schönmann, Kurt

(56) Entgegenhaltungen:
- DE-A1- 4 327 764
- DE-A1- 10 163 379
- DE-A1- 10 245 815
- DE-A1- 19 515 255

## Beschreibung

### Stand der Technik

Die Erfindung geht aus von einer Luftfederungseinrichtung für Fahrzeuge, insbesondere für Nutzfahrzeuge, gemäß dem Oberbegriff von Anspruch 1.

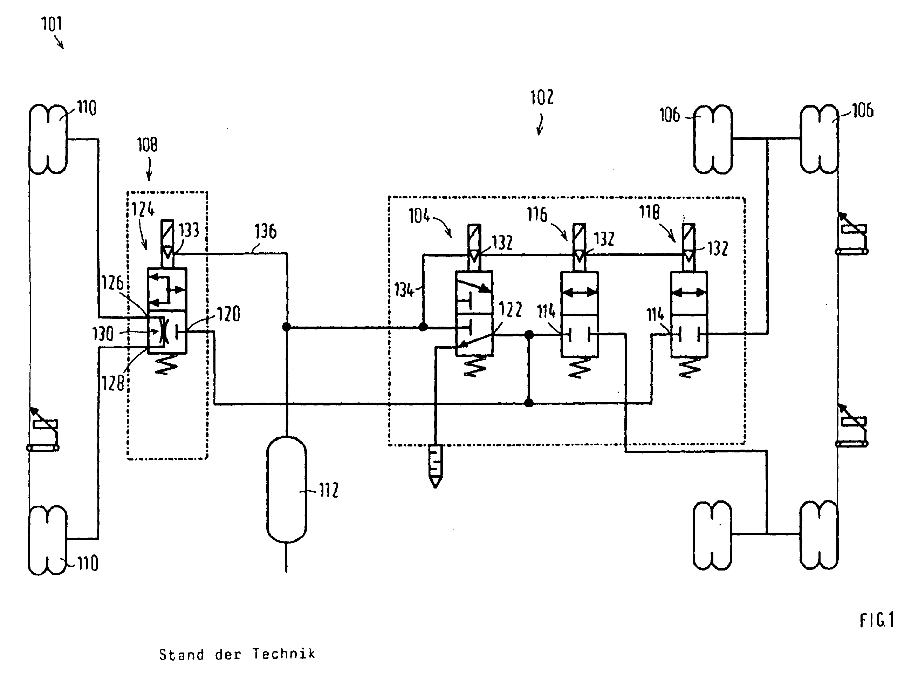

Eine bekannte, in Fig.1 gezeigte Luftfederungseinrichtung 101 umfasst einen einer Hinterachse zugeordneten Ventilblock 102, beinhaltend ein zentrales 3/2-Wegeventil 104 zum Be- und Entlüften von Luftfederbälgen 106 der Hinterachse, und einen einer Vorderachse zugeordneten Ventilblock 108 zum Be-und Entlüften von Luftfederbälgen 110 der Vorderachse.

Das zentrale 3/2-Wegeventil 104 des der Hinterachse zugeordneten Ventilblocks 102 bringt entweder einen Druckluftvorrat 112 mit Druckeingängen 114 von nachgeschalteten, je einer Fahrzeugseite der Hinterachse zugeordneten 2/2-Wegeventilen 116, 118, deren Druckausgänge ihrerseits mit den Luftfederbälgen 106 der Hinterachse verbunden sind, und mit einem Vorratsdruckanschluss 120 des der Vorderachse zugeordneten Ventilblocks 108 oder diesen Vorratsdruckanschluss 120 und die Druckeingänge 114 der 2/2-Wegeventile 116, 118 mit einer Entlüftung 26 in Verbindung. Die beiden 2/2-Wegeventile 116, 118 schalten entweder die ihnen zugeordneten Luftfederbälge 106 der Hinterachse auf zu einem Druckausgang 122 des zentralen 3/2-Wegeventils 104 oder sperren eine solche Verbindung.

Der der Vorderachse zugeordnete Ventilblock 108 beinhaltet ebenfalls ein 3/2-Wegeventil 124, welches je nach seiner Schaltstellung entweder seinen Vorratsdruckanschluss 120 mit Anschlüssen 126, 128 von Luftfederbälgen 110 der Vorderachse oder in einer Fahrstellung die beiden Anschlüsse 126, 128 über eine Drossel 130 miteinander verbindet und den Vorratsdruckanschluss 120 sperrt.

Das 3/2-Wegeventil 124 des der Vorderachse zugeordneten Ventilblocks 108, das zentrale 3/2-Wegeventil 104 sowie die beiden 2/2-Wegeventile 116, 118 des der Hinterachse zugeordneten Ventilblocks 102 sind als pneumatisch vorsteuerte Magnetventile ausgebildet, d.h. dass sie jeweils durch ein aus Maßstabsgründen nicht gezeigtes Relaisventil angesteuert werden, welches seinerseits elektrisch gesteuert wird. Hierzu sind die Vorsteueranschlüsse 132, 133 dieser Ventile über pneumatische Leitungen 134, 136 mit dem Druckluftvorrat 112 verbunden, insbesondere verläuft eine pneumatische Leitung 136 vom Druckluftvorrat 112 zum Vorsteueranschluss 133 des 3/2-Wegeventils 124 des der Vorderachse zugeordneten Ventilblocks 108.

In der DE 101 63 379 A1 ist eine Luftfederungsanlage mit einer Mehrzahl von Bälgen beschrieben, die über eine oder mehrer Ventilanordnungsselektive mit zumindest einer Druckwelle verbindbar sind. Diese Luftfederungsanlage weist einen Drucksensor und eine Drucksensierventilanordnung auf, die dazu vorgesehen ist, den Drucksensor selektiv mit zumindest einigen der Bälge zu verbinden.

Der vorliegenden Erfindung liegt die Aufgabe zugrunde, eine Luftfederungseinrichtung der eingangs erwähnten Art derart weiter zu entwickeln, dass sie kostengünstiger zu fertigen ist.

Diese Aufgabe wird erfindungsgemäß durch die kennzeichnenden Merkmale von Anspruch 1 gelöst.

### Vorteile der Erfindung

Indem der pneumatische Vorsteueranschluss des der Vorderachse zugeordneten Ventilblocks mit einem Druckausgang einer Wechselventileinrichtung verbunden ist, von welcher ein Druckeingang über das zentrale Ventil des der Hinterachse zugeordneten Ventilblocks entweder mit dem Druckluftvorrat oder mit der Entlüftung und der andere Druckeingang mit wenigstens einem der Luftfederbälge der Vorderachse in Verbindung bringbar ist und die Wechselventileinrichtung den jeweils höheren der an den Druckeingängen anstehenden Drücke an den Druckausgang durchschaltet, kann die pneumatische Leitung 136 vom Druckluftvorrat 112 zum Vorsteueranschluss 133 des 3/2-Wegeventils des der Vorderachse zugeordneten Ventilblocks entfallen. Denn dann wird der pneumatische Vorsteueranschluss des 3/2-Wegeventils des der Vorderachse zugeordneten Ventilblocks entweder von wenigstens einem Luftfederbalg der Vorderachse oder vom Druckluftvorrat über das entsprechend durchgeschaltete, zentrale 3/2-Wegeventil des der Hinterachse zugeordneten

Ventilblocks mit dem notwendigen Vorsteuerdruck versorgt. Verbunden mit dem Entfall der genannten pneumatischen Leitung sinkt der Verrohrungsaufwand und die Anzahl der benötigten Rohr-Fittings.

Besonders bevorzugt ist die Wechselventileinrichtung mit dem 3/2-Wegeventil des der Vorderachse zugeordneten Ventilblocks zu einer Baueinheit zusammengefasst, was eine sehr kompakte, platzsparende Bauweise ermöglicht.

Nachstehend ist eine Luftfederungseinrichtung nach dem Stand der Technik und ein Ausführungsbeispiel der Erfindung in den Zeichnungen dargestellt und in der nachfolgenden Beschreibung näher erläutert. Es zeigen
- Fig. 1: einen schematischen Funktionsschaltplan einer bekannten Luftfederungseinrichtung gemäß dem Stand der Technik;
- Fig. 2: einen schematischen Funktionsschaltplan einer Luftfederungseinrichtung gemäß einer bevorzugten Ausführungsform der Erfindung.

Figur 1 zeigt eine bekannte Luftfederungseinrichtung 101, welche einen einer Hinterachse zugeordneten Ventilblock 102 umfasst, beinhaltend ein zentrales 3/2-Wegeventil 104 zum Be- und Entlüften von Luftfederbälgen 106 der Hinterachse, und einen einer Vorderachse zugeordneten Ventilblock 108 zum Be-und Entlüften von Luftfederbälgen 110 der Vorderachse.

Das zentrale 3/2-Wegeventil 104 des der Hinterachse zugeordneten Ventilblocks 102 bringt entweder einen Druckluftvorrat 112 mit Druckeingängen 114 von nachgeschalteten, je einer Fahrzeugseite der Hinterachse zugeordneten 2/2-Wegeventilen 116, 118, deren Druckausgänge ihrerseits mit den Luftfederbälgen 106 der Hinterachse verbunden sind, und mit einem Vorratsdruckanschluss 120 des der Vorderachse zugeordneten Ventilblocks 108 oder diesen Vorratsdruckanschluss 120 und die Druckeingänge 114 der 2/2-Wegeventile 116, 118 mit einer Entlüftung 26 in Verbindung. Die beiden 2/2-Wegeventile 116, 118 schalten entweder die ihnen zugeordneten Luftfederbälge 106 der Hinterachse auf zu einem Druckausgang 122 des zentralen 3/2-Wegeventils 104 oder sperren eine solche Verbindung.

Der der Vorderachse zugeordnete Ventilblock 108 beinhaltet ebenfalls ein 3/2-Wegeventil 124, welches je nach seiner Schaltstellung entweder seinen Vorratsdruckanschluss 120 mit Anschlüssen 126, 128 von Luftfederbälgen 110 der Vorderachse oder in einer Fahrstellung die beiden Anschlüsse 126, 128 über eine Drossel 130 miteinander verbindet und den Vorratsdruckanschluss 120 sperrt.

Das 3/2-Wegeventil 124 des der Vorderachse zugeordneten Ventilblocks 108, das zentrale 3/2-Wegeventil 104 sowie die beiden 2/2-Wegeventile 116, 118 des der Hinterachse zugeordneten Ventilblocks 102 sind als pneumatisch vorsteuerte Magnetventile ausgebildet, d.h. dass sie jeweils durch ein aus Maßstabsgründen nicht gezeigtes Relaisventil angesteuert werden, welches seinerseits elektrisch gesteuert wird. Hierzu sind die Vorsteueranschlüsse 132, 133 dieser Ventile über pneumatische Leitungen 134, 136 mit dem Druckluftvorrat 112 verbunden, insbesondere verläuft eine pneumatische Leitung 136 vom Druckluftvorrat 112 zum Vorsteueranschluss 133 des 3/2-Wegeventils 124 des der Vorderachse zugeordneten Ventilblocks 108.

### Beschreibung des Ausführungsbeispiels

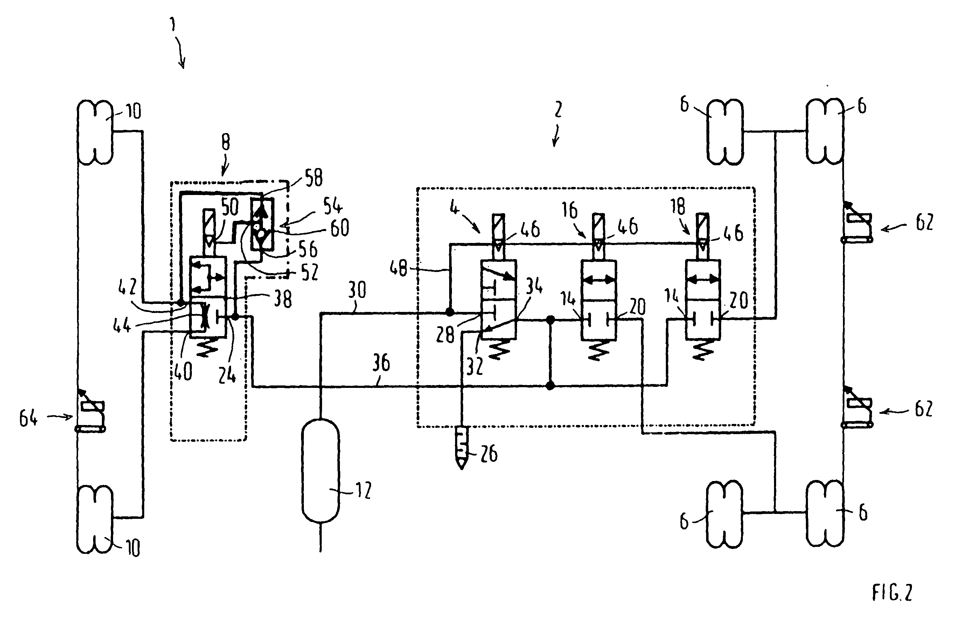

Die in Fig. 2 insgesamt mit 2 bezeichnete Luftfederungseinrichtung eines Nutzfahrzeugs umfasst einen einer Hinterachse zugeordneten Ventilblock 2, beinhaltend ein zentrales 3/2-Wegeventil 4 um Be- und Entlüften von Luftfederbälgen 6 der Hinterachse, und einen einer Vorderachse zugeordneten Ventilblock 8 zum Be- und Entlüften von Luftfederbälgen 10 der Vorderachse.

Das zentrale 3/2-Wegeventil 4 des der Hinterachse zugeordneten Ventilblocks 2 bringt entweder einen Druckluftvorrat 12 mit Druckeingängen 14 von nachgeschalteten, Luftfederbälgen 6 je einer Fahrzeugseite der Hinterachse zugeordneten 2/2-Wegeventilen 16, 18, deren Druckausgänge 20 ihrerseits mit den Luftfederbälgen 6 der Hinterachse verbunden sind, und mit einem Vorratsdruckanschluss 24 des der Vorderachse zugeordneten Ventilblocks 8 oder diesen und die Druckeingänge 14 der 2/2-Wegeventile 16, 18 mit einer Entlüftung 26 in Verbindung. Hierzu ist ein Druckeingang 28 des zentralen 3/2-Wegeventils 4 über eine Vorratsdruckleitung 30 mit dem Druckluftvorrat 12 und ein Entlüftungsanschluss 32 mit der Entlüftung 26 verbunden. Der Druckausgang 34 des 3/2-Wegeventils 4 ist außerdem über eine Druckleitung 36 an den Vorratsdruckanschluss 24 des der Vorderachse zugeordneten Ventilblocks 8 angeschlossen. Die beiden 2/2-Wegeventile 16, 18 schalten entweder die ihnen zugeordneten Luftfederbälge 6 der Hinterachse auf den Druckausgang 34 des zentralen 3/2-Wegeventils 4 oder sperren eine solche Verbindung.

Der der Vorderachse zugeordnete Ventilblock 8 beinhaltet ebenfalls ein 3/2-Wegeventil 38, welches je nach seiner Schaltstellung entweder seinen Vorratsdruckanschluss 24 mit Anschlüssen 40, 42 von Luftfederbälgen 10 der Vorderachse oder in einer Fahrstellung die beiden Anschlüsse 40, 42 über eine Drossel 44 miteinander verbindet und den Vorratsdruckanschluss 24 sperrt.

Das 3/2-Wegeventil 38 des der Vorderachse zugeordneten Ventilblocks 8, das zentrale 3/2-Wegeventil 4 und die beiden 2/2-Wegeventile 16, 18 des der Hinterachse zugeordneten Ventilblocks 2 sind als pneumatisch vorgesteuerte Magnetventile ausgebildet, d.h. dass sie jeweils durch ein aus Maßstabsgründen nicht gezeigtes Relaisventil angesteuert werden, welches seinerseits elektrisch gesteuert wird. Die elektrische Ansteuerung ist ebenfalls aus Maßstabsgründen nicht gezeigt. Zur Druckluftversorgung der Vorsteuerung ist mit Ausnahme des 3/2-Wegeventils 38 des der Vorderachse zugeordneten Ventilblocks 8 ein jeder Steueranschluss 46 der restlichen Ventile 4, 16, 18 über eine pneumatische Leitung 48 mit dem Druckluftvorrat 12 verbunden.

Hingegen ist der pneumatische Vorsteueranschluss 50 des 3/2-Wegeventils 38 des der Vorderachse zugeordneten Ventilblocks 8 mit einem Druckausgang 52 einer Wechselventileinrichtung 54 verbunden, von welcher ein Druckeingang 56 über das zentrale 3/2-Wegeventil 4 des der Hinterachse zugeordneten Ventilblocks 2 entweder mit dem Druckluftvorrat 12 oder mit der Entlüftung 26 und der andere Druckeingang 58 mit wenigstens einem der Luftfederbälge 10 der Vorderachse in Verbindung bringbar ist. Dabei schaltet die Wechselventileinrichtung 54 den jeweils höheren der an den Druckeingängen 56, 58 anstehenden Drücke an ihren Druckausgang 52 durch, indem ein Schaltglied 60 den jeweiligen Strömungsweg öffnet oder verschließt. Die Wechselventileinrichtung 54 ist vorzugsweise in das 3/2-Wegeventil 38 des der Vorderachse zugeordneten Ventilblocks 8 integriert.

Ein Niveaugeber misst mit Hilfe von Drehpotentiometern 62, 64 an der Vorderachse und an der Hinterachse, deren Spannungsabgriff über je einen Antriebshebel mit der jeweiligen Fahrzeugachse verbunden ist, den Abstand zwischen der jeweiligen Fahrzeugachse und dem Fahrzeugaufbau. Der Niveaugeber ist mit einem nicht gezeigten elektronischen Steuergerät verbunden.

Vor diesem Hintergrund ist die Funktionsweise der erfindungsgemäßen Luftfederungseinrichtung 1 wie folgt:

Wird das Nutzfahrzeug beladen, so werden die Luftfederbälge 6, 10 zusammengedrückt und der Fahrzeugaufbau senkt sich. Die mit den Fahrzeugachsen verbundenen Hebel drehen die Schleifer der Drehpotentiometer 62, 64 auf der jeweiligen Potentiometerbahn in die Stellung "Heben". Das Steuergerät erkennt die Spannungsabweichung und gibt elektrische Stellbefehle an die beiden 2/2-Wegeventile 16, 18 und das 3/2-Wegeventil 4 des der Hinterachse zugeordneten Ventilblocks 2 sowie an das 3/2-Wegeventil 38 des der Vorderachse zugeordneten Ventilblocks 8.

Das 3/2-Wegeventil 4 des der Hinterachse zugeordneten Ventilblocks 2 schaltet daraufhin in seine Belüftungsstellung, in welcher der Druckluftvorrat 12 mit den Druckeingängen 14 der nachgeschalteten 2/2-Wegeventile 16, 18 verbunden sind, welche ihrerseits diesen Druck zu den Luftfederbälgen 6 der Hinterachse weiterschalten. Gleichzeitig wird dieser Druck auch über die Druckleitung 36 in den Vorratsdruckanschluss 24 des 3/2-Wegeventils 38 des der Vorderachse zugeordneten Ventilblocks 8 eingesteuert. Gleichzeitig steht der Druck des Druckluftvorrats 12 über die Druckleitung 36 auch am Druckeingang 56 der Wechselventileinrichtung 54 an. Dieser Druck ist stets höher als der am Druckeingang 58 anstehende Druck, welcher in den Luftfederbälgen 10 der Vorderachse herrscht, so dass der resultierende Differenzdruck das Schaltglied 60 in eine Position drängt, in welcher der Strömungsweg über die Druckleitung 36 zwischen dem Druckluftvorrat 12 und dem Vorsteueranschluss 50 des 3/2-Wegeventils 38 des der Vorderachse zugeordneten Ventilblocks 8 geöffnet ist. Dann wird die Relaisventileinrichtung dieses 3/2-Wegeventils 38 mit Vorsteuerdruck versorgt und kann auf das elektrische Steuersignal des Steuergeräts hin ebenfalls in seine Durchgangsstellung geschaltet werden, in welcher der Vorratsdruckanschluss 24 zu den Anschlüssen 40, 42 der Luftfederbälge 10 der Vorderachse durchgeschaltet wird. Hierdurch werden schließlich auch die Luftfederbälge 10 der Vorderachse belüftet und der Fahrzeugaufbau insgesamt auf das gewünschte Soll-Niveau angehoben. Durch eine entsprechende Ansteuerung der 2/2-Wegeventile 16, 18 des der Hinterachse zugeordneten Ventilblocks 2 kann das Niveau der beiden Fahrzeugseiten unterschiedlich angepasst, werden, was im Falle einer exzentrischen Ladung notwendig sein kann.

In Fahrstellung, d.h. mit an das Soll-Niveau angepasstem Niveau des Fahrzeugaufbaus sind sämtliche Magnetventile 4, 16, 18, 38 unbestromt und in Schaltstellungen, in welchen die Anschlüsse 28, 40 und 42 gegen den Druckluftvorrat 12 und die Entlüftung 26 gesperrt sind, so dass keine Druckluft aus den Luftfederbälgen 6, 10 hinein- oder aus ihnen herausströmen kann.

Zum Absenken des Niveaus des Fahrzeugaufbaus drehen die mit den Fahrzeugachsen verbundenen Hebel die Schleifer der Drehpotentiometer 62, 64 auf der jeweiligen Potentiometerbahn in die Stellung "Senken". Das Steuergerät erkennt die Spannungsabweichung und gibt elektrische Stellbefehle an die 2/2-Wegeventile 16, 18 und das 3/2-Wegeventil 4 des der Hinterachse zugeordneten Ventilblocks 2 sowie an das 3/2-Wegeventil 38 des der Vorderachse zugeordneten Ventilblocks 8.

Daraufhin schaltet das 312-Wegeventil 4 des der Hinterachse zugeordneten Ventilblocks 2 in seine Entlüftungsstellung, in welcher die Druckeingänge 14 der durchgeschalteten 2/2-Wegeventile 16, 18 und die sich zum Vorratsdruckanschluss 24 des ebenfalls durchgeschalteten 3/2-Wegeventils 38 des der Vorderachse zugeordneten Ventilblocks 8 erstreckende Druckleitung 36 mit der Entlüftung 26 verbunden werden. Infolgedessen wird der Druck in den Luftfederbälgen 6 der Hinterachse reduziert. Gleichzeitig fällt auch der Druck in der Druckleitung 36, welcher nun kleiner ist als der Druck in den Luftfederbälgen 10 der Vorderachse, weshalb das Schaltglied 60 der Wechselventileinrichtung 54 seine Position ändert und nun den Strömungsweg zwischen dem Vorsteueranschluss 50 des 3/2-Wegeventils 38 des der Vorderachse zugeordneten Ventilblocks 8 und dem Druckluftvorrat 12 verschließt, hingegen den Strömungsweg zwischen diesem Vorsteueranschluss 50 und den Luftfederbälgen 10 der Vorderachse öffnet, so dass an dem Vorsteueranschluss 50 des 3/2-Wegeventils 38 des der Vorderachse zugeordneten Ventilblocks 8 nun der in den Luftfederbälgen 10 herrschende Druck als Vorsteuerdruck ansteht. Ansonsten ändert sich die Durchschaltstellung dieses Ventils 38 nicht, so dass die Luftfederbälge 10 der Vorderachse über das geöffnete 3/2-Wegeventil 38, die Druckleitung 36 sowie das auf die Entlüftung 26 geschaltete 3/2-Wegeventil 4 des der Hinterachse zugeordneten Ventilblocks 2 entlüftet werden, bis ein Soll-Niveau erreicht ist.

### Bezugszeichenliste

- 1: Luftfederungseinrichtung
- 2: Ventilblock
- 4: 3/2-Wegeventil
- 6: Luftfederbälge
- 8: Ventilblock
- 10: Luftfederbälge
- 12: Druckluftvorrat
- 14: Druckeingang
- 16: 2/2-Wegeventil
- 18: 2/2-Wegeventil
- 20: Druckausgang
- 24: Vorratsdruckanschluss
- 26: Entlüftung
- 28: Druckeingang
- 30: Vorratsdruckleitung
- 32: Entlüftungsanschluss
- 34: Druckausgang
- 36: Druckleitung
- 38: 3/2-Wegeventil
- 40: Anschluss
- 42: Anschluss
- 44: Drossel
- 46: Steueranschluss
- 48: pneumatische Leitung
- 50: Vorsteueranschluss
- 52: Druckausgang
- 54: Wechselventileinrichtung
- 56: Druckeingänge
- 58: Druckeingang
- 60: Schaltglied
- 62: Drehpotentiometer
- 63: Drehpotentiometer

## Patentansprüche

1. Luftfederungseinrichtung (1) für Fahrzeuge, insbesondere für Nutzfahrzeuge, mit
a) einem einer Hinterachse zugeordneten Ventilblock (2), beinhaltend ein zentrales Ventil (4) zum Be- und Entlüften von Luftfederbälgen (6) der Hinterachse, und
b) einem einer Vorderachse zugeordneten Ventilblock (8) zum Be- und Entlüften von Luftfederbälgen (10) der Vorderachse, wobei
c) das zentrale Ventil (4) des der Hinterachse zugeordneten Ventilblocks (2) entweder einen Druckluftvorrat (12) mit den Luftfederbälgen (6) der Hinterachse und mit einem Vorratsdruckanschluss (24) des der Vorderachse zugeordneten Ventilblocks (8) oder diesen Vorratsdruckanschluss (24) und die Luftfederbälge (6) der Hinterachse mit einer Entlüftung (26) in Verbindung bringt, und wobei
d) wenigstens der der Vorderachse zugeordnete Ventilblock (8) einen pneumatischen Vorsteueranschluss (50) für eine pneumatisch-elektrische Vorsteuerung aufweist, **dadurch gekennzeichnet, dass**
e) der pneumatische Vorsteueranschluss (50) des der Vorderachse zugeordneten Ventilblocks (8) mit einem Druckausgang (52) einer Wechseiventüeinrichtung (54) verbunden ist, von welcher ein Druckeingang (56) über das zentrale Ventil (4) des der Hinterachse zugeordneten Ventilblocks (2) entweder mit dem Druckluftvorrat (12) oder mit der Entlüftung (26) und der andere Druckeingang (58) mit wenigstens einem der Luftfederbälge (10) der Vorderachse in Verbindung bringbar ist und die Wechselventileinrichtung (54) den jeweils höheren der an ihren Druckeingängen (56; 58) anstehenden Drücke an den Druckausgang (52) durchschaltet.

2. Luftfederungseinrichtung nach Anspruch 1, **dadurch gekennzeichnet, dass** das zentrale Ventil (4) des der Hinterachse zugeordneten Ventilblocks (2) durch ein 3/2-Wegeventil mit pneumatischelektrischer Vorsteuerung gebildet wird, von welchem der Druckausgang (34) mit je einem Druckeingang (14) von nachgeschalteten, je einer Fahrzeugseite zugeordneten 2/2-Wegeventilen (16, 18) verbunden ist, welche eine Verbindung zu Luftfederbälgen (6) der Hinterachse an der jeweiligen Fahrzeugseite entweder sperren oder durchschalten.

3. Luftfederungseinrichtung nach Anspruch 1 oder 2, **dadurch gekennzeichnet, dass** die pneumatisch-elektrische Vorsteuerung eine elektrisch ansteuerbare Relaisventileinrichtung beinhaltet.

4. Luftfederungseinrichtung nach wenigstens einem der vorhergehenden Ansprüche, **dadurch gekennzeichnet, dass** der der Vorderachse zugeordnete Ventilblock (8) derart schaltbar ist, dass die Luftfederbälge (10) der Vorderachse über eine Drosseleinrichtung (44) miteinander oder mit dem Vorratsdruckanschluss (24) verbunden sind.

5. Luftfederungseinrichtung nach wenigstens einem der vorhergehenden Ansprüche, **dadurch gekennzeichnet, dass** der der Vorderachse zugeordnete Ventilblock (8) ein 3/2-Wegeventil (38) beinhaltet.

6. Luftfederungseinrichtung nach Anspruch 5, **dadurch gekennzeichnet, dass** die Wechselventileinrichtung (54) mit dem 3/2-Wegeventil (38) des der Vorderachse zugeordneten Ventilblocks (8) zu einer Baueinheit zusammengefasst ist.

## Claims

1. Pneumatic suspension unit (1) for vehicles, in particular for commercial vehicles, comprising
(a) a valve block (2) associated with a rear axle and including a central valve (4) for aerating and venting air suspension bellows (6) of said rear axle, and
(b) a valve block (8) associated with a front axle for aerating and venting air suspension bellows (10) of said front axle, with
(c) said central valve (4) of said valve block (2) associated with said rear axle establishing a communication either between a compressed-air reservoir (12) and said air suspension bellows (6) of said rear axle and a reservoir pressure port (24) of said valve block (8) associated with said front axle or between said reservoir pressure port (24) as well as said air suspension bellows (6) of said rear axle and a venting means (26), and with
(d) at least said valve block (8) associated with said front axle including a pneumatic pilot port (50) for a pneumatic-electrical pilot function, **characterised in that**
(3) said pneumatic pilot port (50) of said valve block (8) associated with said front axle is connected to a pressure output (52) of a shuttle valve means (54) of which a pressure input (56) is adapted to be communicated, via said central valve (4) of said valve block (2) associated with said rear axle, either with said compressed-air reservoir (12) or with said venting means (26) whilst the other pressure input (58) is adapted to be communicated with at least one of said air suspension bellows (10) of said front axle, and that said shuttle valve means communicates the respectively higher one of the pressures pending at said pressure inputs (56, 58) to said pressure output (52).

2. Pneumatic suspension unit according to Claim 1, **characterised in that** said central valve (4) of said valve block (2) associated with said rear axle is constituted by a 3/2-way valve with a pneumatic-electrical pilot function, by means of which said pressure output (34) is connected to one respective pressure input (14) of downstream 2/2-way valves (16, 18) associated each with one side of the vehicle, which close or open a communication towards said air suspension bellows (6) of said rear axle on the respective side of the vehicle.

3. Pneumatic suspension unit according to Claim 1 or 2, **characterised in that** said pneumatic-electrical pilot system includes an electrically controllable relay valve means.

4. Pneumatic suspension unit according to at least one of the preceding Claims, **characterised in that** said valve block (8) associated with said front axle is adapted to be switched in such a way that said air suspension bellows (10) of said front axle communicate via a throttle means (44) with each other or with said reservoir pressure port (24).

5. Pneumatic suspension unit according to at least one of the preceding Claims, **characterised in that** said valve block (8) associated with said front axle includes a 3/2-way valve (38).

6. Pneumatic suspension unit according to Claim 5, **characterised in that** said shuttle valve means (54) is combined with said 3/2-way valve of said valve block (8) associated with said front axle so as to form a single module.

## Revendications

1. Système de suspension pneumatique (1) pour véhicules, en particulier pour véhicules utilitaires, comprenant
(a) un groupe de soupapes (2) affecté à un essieu arrière et contenant une soupape centrale (4) pour l'aération et la purge d'air des soufflets de suspension à air (6) dudit essieu arrière, et
(b) un groupe de soupapes (8) affecté à un essieu avant pour l'aération et la purge d'air des soufflets de suspension à air (10) dudit essieu avant,
(c) à ladite soupape centrale (4) dudit groupe de soupapes (2) affecté audit essieu arrière établissant une communication soit entre un réservoir d'air comprimé (12) et lesdits soufflets de suspension à air (6) dudit essieu arrière et un raccord de pression de réservoir (24) dudit groupe de soupapes (8) affecté audit essieu avant, soit entre ledit raccord de pression de réservoir (24) ainsi que lesdits soufflets de suspension à air (6) dudit essieu arrière et un moyen de purge d'air (26), et
(d) à au moins ledit groupe de soupapes (8) affecté audit essieu avant contenant un raccord de pilotage pneumatique (50) pour une fonction pilote pneumatique électrique, **caractérise en ce que**
(3) ledit raccord de pilotage pneumatique (50) dudit groupe de soupapes (8) affecté audit essieu avant est raccordé à une sortie de pression (52) d'un moyen à moyen sélecteur de circuit (54), dont une entrée de pression (56) est apte à être mise en communication, via ladite soupape centrale (4) dudit groupe de soupapes (2) affecté audit essieu arrière, soit avec ledit réservoir d'air comprimé (12), soit avec ledit moyen de purge d'air (26), pendant que l'autre entrée de pression (58) est apte à être mise en communication avec au moins un parmi lesdits soufflets de suspension à air (10) dudit essieu avant, et **en ce que** ledit moyen sélecteur de circuit met la pression plus haute respective parmi les pressions appliquées auxdites entrées de pression (56, 58) en communication avec ladite sortie de pression (52).

2. Système de suspension pneumatique selon la revendication 1, **caractérise en ce que** ladite soupape centrale (4) dudit groupe de soupapes (2) affecté audit essieu arrière est constitué par une soupape à 3/2 voies à fonction pilote pneumatique électrique, moyennant de laquelle ladite sortie de pression (34) est reliée à une entrée de pression respective (14) des soupapes à 3/2 voies (16, 18) en aval, dont chacune est affectée à un côte du véhicule, qui ferment ou ouvrent une communication vers lesdits soufflets de suspension à air (6) dudit essieu arrière du côté respective du véhicule.

3. Système de suspension pneumatique selon la revendication 1 ou 2, **caractérise en ce que** ledit système de pilotage pneumatique électrique contient un moyen à soupape en relais à commande électrique.

4. Système de suspension pneumatique selon au moins une des revendications précédentes, **caractérise en ce que** ledit groupe de soupapes (8) affecté audit essieu avant est apte à être commuté d'une telle façon, que lesdits soufflets de suspension à air (10) dudit essieu avant se trouvent en communication, via un moyen d'étranglement (44), l'un avec l'autre ou avec ledit raccord de pression de réservoir (24).

5. Système de suspension pneumatique selon au moins une des revendications précédentes, **caractérise en ce que** ledit groupe de soupapes (8) affecté audit essieu avant contient une soupape à 3/2 voies (38).

6. Système de suspension pneumatique selon la revendication 5, **caractérise en ce que** ledit moyen sélecteur de circuit (54) est combiné avec ladite soupape à 3/2 voies dudit groupe de soupapes (8) affecté audit essieu avant d'une telle manière, qu'ils constituent un seul module.
